# EUROPÄISCHE PATENTSCHRIFT

(11) **EP 4 206 097 B1**
(45) Veröffentlichungstag und Bekanntmachung des Hinweises auf die Patenterteilung: **27.05.2026**
(21) Anmeldenummer: 22214896.7
(22) Anmeldetag: 20.12.2022
(51) Int. Cl.: B65G 1/06, B65G 47/22, B65G 1/04

(54) **ZENTRIERSTATION UND VERFAHREN ZUM HANDHABEN ZUMINDEST EINES LADUNGSTRÄGERS**
CENTRING STATION AND METHOD FOR HANDLING AT LEAST ONE LOAD CARRIER
STATION DE CENTRAGE ET PROCEDE DE MANUTENTION D' AU MOINS UN SUPPORT DE CHARGE

(30) Priorität: 28.12.2021 DE 102021006362
(43) Veröffentlichungstag der Anmeldung: 05.07.2023
(73) Patentinhaber: Gebhardt Fördertechnik GmbH, D-74889 Sinsheim (DE)
(72) Erfinder: BRANNER, Fabian, 74915 Waibstadt (DE); NAPETSCHNIG, Günther, 6845 Hohenems (AT); GEBHARDT, Marco, 74889 Sinsheim (DE)
(74) Vertreter: Patentanwälte und Rechtsanwalt Weiß, Arat & Partner mbB

(56) Entgegenhaltungen:
- WO-A1-2009/132687
- DE-A1- 102010 029 566
- US-A- 5 967 728
- US-A1- 2020 283 228

## Beschreibung

### Technisches Gebiet

Die Erfindung betrifft eine Zentrierstation und ein Verfahren zum Handhaben zumindest eines Ladungsträgers gemäss den unabhängigen Ansprüchen.

### Stand der Technik

Zentriermittel, beispielsweise für Regallager, sind aus dem Stand der Technik bekannt. Beispielsweise zeigen die US 2020 283 228 A1, die WO 2009 132 687 A1 sowie die DE 10 2010 029 566 A1 derartige Zentriermittel. Die US 2020/283228 A1 offenbart eine Zentrierstation nach dem Oberbegriff des Anspruchs 1 und ein Verfahren nach dem Oberbegriff des Anspruchs 8.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den Unteransprüchen beschrieben.

Eine Zentrierstation gemäss der vorliegenden Erfindung kann zur Korrektur einer Position eines Ladungsträgers auf einem Kanalfahrzeug dienen. Die Zentrierstation umfasst einen entlang einer Längsrichtung verlaufenden Zentrierkanal. Der Zentrierkanal umfasst zumindest eine in Längsrichtung verlaufende Fahrschiene für das Kanalfahrzeug und zumindest zwei im Wesentlichen in Längsrichtung oberhalb der zumindest einen Fahrschiene verlaufende Zentriermittel. Der Zentrierkanal umfasst einen Eingang, welcher eine Einfahrt des Kanalfahrzeugs in den Zentrierkanal erlaubt. Eine lichte Weite zwischen den Zentriermitteln nimmt in Längsrichtung des Zentrierkanals ab. Diese lichte Weite wird in Querrichtung, also horizontal und orthogonal zur Längsrichtung gemessen. Die lichte Weite zwischen den Zentriermitteln nimmt ferner in vertikaler Richtung, also vertikal und orthogonal zur Längsrichtung in Richtung zu der zumindest einen Fahrschiene hin ab.

Eine in Längsrichtung des Zentrierkanals abnehmende lichte Weite zwischen den Zentriermitteln zeichnet sich vorzugsweise dadurch aus, dass diese lichte Weite im Bereich des Eingangs grösser ist als im Bereich gegenüber dem Eingang. "In Längsrichtung" meint hierbei vorzugsweise in positiver Längsrichtung, welche von dem Eingang zu einem Bereich gegenüber des Eingangs verläuft.

Eine vertikal und orthogonal zur Längsrichtung in Richtung zu der zumindest einen Fahrschiene hin abnehmende lichte Weite zwischen den Zentriermitteln zeichnet sich vorzugsweise dadurch aus, dass diese lichte Weite in einem unteren Bereich nahe der Fahrschiene kleiner ist als in einem oberen, von der Fahrschiene abgewandten Bereich.

Bevorzugte Ausführungsbeispiele der vorbeschriebenen Zentrierstation sind einfach und kostengünstig herstellbar und erlauben eine schnelle und effiziente Positionskorrektur, beispielsweise eine schnelle Zentrierung des Ladungsträgers auf dem Kanalfahrzeug, mit Hilfe standardmässig vorhandener Bordmittel des Kanalfahrzeugs, insbesondere mit Hilfe eines Antriebs und/oder eines Hubmechanismus. Ein solcher Antrieb dient dem Fortbewegen des Kanalfahrzeugs auf den Fahrschienen und umfasst üblicherweise einen Elektromotor. Ein vorstehend erwähnter Hubmechanismus dient dazu, Ladungsträger abzusenken und anzuheben, wobei insbesondere auf Tragschienen gelagerte Ladungsträger aufgenommen und beförderte Ladungsträger auf solchen Tragschienen abgesetzt werden können.

Bevorzugte Ausführungsbeispiele der vorliegenden Erfindung sind besonders geeignet für Kanallager mit Kanälen, welche nicht sortenrein betrieben werden. In solchen Kanälen sind Umlagerungen deutlich häufiger nötig als in sortenrein betriebenen Kanälen. Da jede Umlagerung das Risiko einer Fehlpositionierung birgt, ermöglichen bevorzugte Ausführungsbeispiele der vorliegenden Erfindung durch einfache und effiziente Korrektur etwaiger Fehlpositionierungen einen reibungslosen Betrieb von Kanallagern mit nicht sortenrein betriebenen Kanälen.

Die lichte Weite zwischen den Zentriermitteln kann über die gesamte Länge des Zentrierkanals hinweg kontinuierlich abnehmen.

Ferner sind Ausführungsformen denkbar, gemäss denen die lichte Weite zwischen Zentriermitteln nur über einen Abschnitt der Zentriermittel hinweg in Längsrichtung abnimmt. Solche Abschnitte verlaufen vorzugsweise nicht parallel zur Längsrichtung.

Wie vorstehend erwähnt nimmt die lichte Weite zwischen den Zentriermitteln in Längsrichtung des Zentrierkanals ab. In sämtlichen Ausführungsformen der vorliegenden Erfindung ist eine, vorzugsweise auf derselben Höhe bezüglich der vertikalen Richtung gemessene lichte Weite zwischen den Zentriermitteln am Eingang des Zentrierkanals grösser als gegenüber dem Eingang.

Hierbei sind jedoch Ausführungsformen denkbar, bei denen die lichte Weite zwischen den Zentriermitteln über gewisse Abschnitte hinweg in Längsrichtung konstant bleibt. Solche Abschnitte mit konstanter lichter Weite zwischen den Zentriermitteln verlaufen vorzugsweise parallel zur Längsrichtung.

Sofern die lichte Weite im Bereich des Eingangs grösser ist als im Bereich gegenüber dem Eingang, sind auch Ausführungsformen denkbar, in welchen die lichte Weite über kleine Bereiche entlang der Längsrichtung zunimmt. Diese Bereiche sind üblicherweise konstruktions- oder fertigungsbedingt und erstrecken sich vorzugsweise über weniger als 30% der Ausdehnung der Zentriermittel in Längsrichtung, noch bevorzugter über weniger als 20% der Ausdehnung der Zentriermittel in Längsrichtung und weiter bevorzugt über weniger als 10% der Ausdehnung der Zentriermittel in Längsrichtung.

Wie vorstehend ebenfalls erwähnt, nimmt ferner die lichte Weite zwischen den Zentriermitteln auch in vertikaler Richtung zur Fahrschiene hin ab. In sämtlichen Ausführungsformen der vorliegenden Erfindung ist eine, vorzugsweise an derselben Position in Bezug auf die Längsrichtung gemessene lichte Weite zwischen den Zentriermitteln in einem unteren Bereich, welche der Fahrschiene am nächsten kommt, geringer, als in einem oberen Bereich, welche am weitesten von der Fahrschiene entfernt ist. Hierbei sind jedoch Ausführungsformen denkbar, bei denen die lichte Weite zwischen den Zentriermitteln über gewisse Abschnitte hinweg in der vertikalen Richtung konstant bleibt.

Sofern diese lichte Weite in einem Bereich nahe der Fahrschiene kleiner ist als in einem von der Fahrschiene abgewandten Bereich, sind auch Ausführungsformen denkbar, in welchen die lichte Weite über kleine Bereiche entlang der vertikalen Richtung zur Fahrschiene hin zunimmt. Diese Bereiche sind üblicherweise konstruktions- oder fertigungsbedingt und erstrecken sich vorzugsweise über weniger als 30% der vertikalen Ausdehnung der Zentriermittel, noch bevorzugter über weniger als 20% der vertikalen Ausdehnung der Zentriermittel und weiter bevorzugt über weniger als 10% der vertikalen Ausdehnung der Zentriermittel.

Unter einer Korrektur der Position des Ladungsträgers wird hierbei vorzugsweise verstanden, dass der Ladungsträger so auf dem Kanalfahrzeug ausgerichtet wird, dass das Kanallager ordnungsgemäss betrieben werden kann, ohne dass beispielsweise der Ladungsträger an irgendeiner Einrichtung innerhalb des Kanallagers anstösst oder verkantet. Üblicherweise wird durch Korrektur der Position des Ladungsträgers eine fehlerhafte Positionierung des Ladungsträgers auf dem Kanalfahrzeug korrigiert.

Eine Korrektur der Position des Ladungsträgers kann insbesondere durch Rotation des Ladungsträgers und/oder durch horizontale Verschiebung des Ladungsträgers erfolgen. Die Verschiebung kann auch als Zentrierung bezeichnet werden. Teilweise werden auch die Rotation und die horizontale Verschiebung zusammenfassend als Zentrierung bezeichnet.

Der Ladungsträger kann beispielsweise eine Palette oder eine Gitterbox sein. Weitere Ladungsträger sind denkbar.

Das Kanalfahrzeug ist bekannt und wird manchmal auch als "Shuttle" bezeichnet. Vorzugsweise handelt es sich um das Kanalfahrzeug eines Kanallagers.

Das Kanalfahrzeug und das Kanallager sind keine zwingenden Bestandteile der erfindungsgemässen Zentrierstation. Ferner können Ausführungsformen der erfindungsgemässen Zentrierstation auch in anderen Regalen oder Lagern eingesetzt werden, als den nachstehend besprochenen Kanallagern.

Mit Hilfe der Zentrierstation gemäss der vorliegenden Erfindung kann vorzugsweise die gewünschte Position des Ladungsträgers auf dem Kanalfahrzeug durch Verdrehen des Ladungsträgers relativ zum Kanalfahrzeug oder durch horizontale Verschiebung des Ladungsträgers relativ zum Kanalfahrzeug oder durch eine Kombination der vorgenannten Operationen erfolgen.

Sind mehrere Fahrschienen vorhanden, so verlaufen diese vorzugsweise parallel zueinander. Beispielsweise kann an Ausführungsformen mit genau zwei Fahrschienen gedacht sein.

Vorzugsweise sind genau zwei Zentriermittel im Zentrierkanal angeordnet. Die Zentriermittel können an einem äusseren Rand des Zentrierkanals verlaufen.

Da die lichte Weite zwischen den Zentriermitteln in Längsrichtung des Zentrierkanals abnimmt, verlaufen die Zentriermittel auch nur im Wesentlichen in Längsrichtung und nicht vollständig parallel zur Längsrichtung. Zumindest eines der Zentriermittel verläuft in Längsrichtung konvergierend zu einer Mitte des Zentrierkanals hin. Es kann auch daran gedacht sein, dass beide Zentriermittel konvergierend zur Mitte des Zentrierkanals hin verlaufen. Der von den Zentriermitteln umschlossene Bereich verjüngt sich also vom Eingang des Zentrierkanals zu dem gegenüberliegenden Ende hin.

Der Zentrierkanal kann zwei Öffnungen aufweisen, und somit gegenüber dem Eingang einen Ausgang umfassen. In dieser Ausführungsform konvergieren die Zentriermittel vorzugsweise zum Ausgang hin.

Der Zentrierkanal kann auch als Sackgasse ausgebildet sein. Am Ende dieser Sackgasse können die nachstehend näher beschriebenen Ausrichtwinkel angeordnet sein.

Die Zentriermittel können Abschnitte umfassen, welche eingerichtet sind, zwecks Korrektur einer Position des Ladungsträgers auf dem Kanalfahrzeug mit dem Ladungsträger in Kontakt zu treten, wobei diese Abschnitte im Querschnitt ausgebildet sein können als eine Form, welche aus der folgenden Liste ausgewählt ist:
- Strecke
- Hintereinanderreihung mehrerer Strecken
- Abschnitt eines Asts einer Parabel
- Kreisbogen
- Ellipsenbogen
- Hintereinanderreihung von zumindest zwei der vorgenannten Formen.

Bei der Korrektur der Position des Ladungsträgers auf dem Kanalfahrzeug kann es sich um eine Zentrierung durch Veränderung einer horizontalen Lage des Ladungsträgers auf dem Kanalfahrzeug handeln. Auch eine reine Drehung ohne Veränderung der horizontalen Lage des Ladungsträgers stellt im Rahmen der vorliegenden Erfindung eine Korrektur der Position des Ladungsträgers dar.

Um mit dem Ladungsträger in Kontakt zu treten, können die Abschnitte der Zentriermittel vorzugsweise zweckentsprechend angeordnet und ausgerichtet sein. Insbesondere sind die Zentriermittel oder zumindest deren Abschnitte abhängig von einer Höhe des Kanalfahrzeugs und dementsprechend abhängig von einer Höhenlage des darauf befindlichen Ladungsträgers in einer Höhe angeordnet, die ein In-Kontakt-Treten erlaubt. Ferner sind die Zentriermittel oder zumindest deren Abschnitte vorzugsweise seitlich so nahe an den Fahrschienen angeordnet, dass ein In-Kontakt-Treten mit dem Ladungsträger möglich ist.

Die vorgenannten Abschnitte der Zentriermittel, welche mit dem Ladungsträger in Kontakt treten können, sind vorzugsweise diejenigen Abschnitte, insbesondere Flächenabschnitte der Zentriermittel, welche zur Mitte des Zentrierkanals hin weisen und somit einander zugewandt sind. Neben der Ausgestaltung als Flächenabschnitte sind linienförmige Ausgestaltungen der vorgenannten Abschnitte der Zentriermittel ebenfalls denkbar.

In bevorzugten Ausführungsformen umfasst der Zentrierkanal genau zwei Zentriermittel. Diese sind vorzugsweise auf einander gegenüberliegenden Seiten der Fahrschiene und im Wesentlichen in Längsrichtung angeordnet.

Die Zentriermittel können dieselbe Form oder unterschiedliche Formen aufweisen.

Die Zentriermittel können Abschnitte umfassen, welche eingerichtet sind, zwecks Korrektur einer Position des Ladungsträgers auf dem Kanalfahrzeug mit dem Ladungsträger in Kontakt zu treten, wobei diese Abschnitte im Längsschnitt ausgebildet sein können als eine Form, welche aus der folgenden Liste ausgewählt ist:
- Strecke
- Hintereinanderreihung mehrerer Strecken
- Abschnitt eines Asts einer Parabel
- Kreisbogen
- Ellipsenbogen
- Hintereinanderreihung von zumindest zwei der vorgenannten Formen.

Im Übrigen gelten für die Form im Längsschnitt die vorstehend in Bezug auf die Form im Querschnitt dargelegten Ausführungen.

Im Zentrierkanal kann endseitig gegenüber dem Eingang zumindest ein Ausrichtwinkel vorgesehen sein.

Der zumindest eine Ausrichtwinkel kann als Anschlag und Stopper dienen. Der zumindest eine Ausrichtwinkel dient somit ebenso wie die Zentriermittel zur Positionskorrektur des Ladungsträgers. Der zumindest eine Ausrichtwinkel ist optional. Es sind auch Ausführungsformen der Zentrierstation ohne Ausrichtwinkel denkbar. Beispielsweise kann abhängig von Art und Ausgestaltung der Zentriermittel auf den zumindest einen Ausrichtwinkel verzichtet werden. Dies gilt insbesondere, wenn die Zentriermittel allein eine Positionskorrektur des Ladungsträgers auf dem Kanalfahrzeug erlauben.

Der zumindest eine Ausrichtwinkel weist vorzugsweise einen zum Eingang hin abfallenden Abschnitt, insbesondere Flächenabschnitt auf. Dieser kann als Strecke oder bogen- bzw. kurvenförmig ausgebildet sein, wie dies vorstehend bereits ausführlich in Bezug auf die Zentriermittel beschrieben wurde.

Die Zentriermittel oder zumindest nicht parallel zur Längsrichtung ausgebildete Abschnitte der Zentriermittel können eine Ausdehnung in Längsrichtung von zumindest 400 Millimetern aufweisen. Die Zentriermittel oder die vorgenannten Abschnitte können ferner eine Ausdehnung in Längsrichtung von zumindest 800 Millimetern, 1200 Millimetern oder 1600 Millimetern aufweisen. Bevorzugt nimmt hierbei die lichte Weite zwischen den Zentriermitteln über zumindest 400 Millimeter, noch bevorzugter über 800 Millimeter, weiter bevorzugt über 1200 Millimeter, weiter bevorzugt über 1600 Millimeter hinweg in Längsrichtung ab.

In bevorzugten Ausführungsbeispielen der Zentrierstation ist ab einer Ausdehnung in Längsrichtung von zumindest 400 Millimetern eine besonders zuverlässige Positionskorrektur zahlreicher verschiedenartiger Fehlpositionierungen möglich.

Die Zentrierstation kann zumindest zwei in Längsrichtung verlaufende Tragschienen für den Ladungsträger umfassen. Tragschienen sind aus dem Stand der Technik bekannte Tragelemente für Ladungsträger in Kanallagern. Die Zentrierstation umfasst vorzugsweise solche Tragschienen, wobei auch Ausführungsformen ohne Tragschienen angedacht sein können. Auf beide Varianten wird in Bezug auf das erfindungsgemässe Verfahren näher eingegangen.

Neben der vorbeschriebenen Zentrierstation umfasst eine Ausführungsform der vorliegenden Erfindung auch ein Kanallager mit einem Kanalfahrzeug und einer Zentrierstation wie vorstehend beschrieben. Es können auch mehrere Kanalfahrzeuge und mehrere Zentrierstationen in dem Kanallager vorhanden sein.

Zur exakten Positionierung innerhalb der Zentrierstation kann das Kanalfahrzeug zumindest einen Sensor zur Erfassung einer Positionsmarkierung umfassen. Hierfür können gesonderte Sensoren zum Einsatz kommen, welche ausschliesslich der exakten Positionierung dienen. Alternativ können die nachstehend im Detail beschriebenen Sensoren zum Einsatz kommen, welche den Ladungsträger und insbesondere die Notwendigkeit einer Positionskorrektur des Ladungsträgers erfassen. Die Zentrierstation kann zumindest eine geeignete Positionsmarkierung umfassen, welche in Bezug auf das Verfahren nachstehend näher beschrieben ist.

Neben der vorbeschriebenen **Zentrierstation** sowie dem vorbeschriebenen **Kanallager** umfassend eine solche Zentrierstation umfasst die vorliegende Erfindung auch ein nachstehend beschriebenes **Verfahren** zum Handhaben zumindest eines Ladungsträgers. Aspekte, Merkmale und Einzelheiten, welche in Bezug auf das Verfahren beschrieben werden, sind auch auf die Zentrierstation und das Kanallager übertragbar und umgekehrt.

Ein Verfahren zum Handhaben zumindest eines Ladungsträgers in einem ein Kanalfahrzeug umfassenden Kanallager umfasst folgende Schritte:
- Das Kanalfahrzeug nimmt den Ladungsträger auf,
- Korrigieren der Position des Ladungsträgers auf dem Kanalfahrzeug, indem das mit dem Ladungsträger beladene Kanalfahrzeug durch einen Eingang eines Zentrierkanals einer Zentrierstation in Längsrichtung in diesen Zentrierkanal einfährt,

wobei dieser Zentrierkanal zumindest eine in Längsrichtung verlaufende Fahrschiene für das Kanalfahrzeug aufweist, wobei der Zentrierkanal weiterhin zumindest zwei im Wesentlichen in Längsrichtung oberhalb der zumindest einen Fahrschiene verlaufende Zentriermittel und/oder zumindest einen endseitig gegenüber dem Eingang angeordneten Ausrichtwinkel aufweist,
wobei das Korrigieren der Position durch In-Kontakt-Treten des Ladungsträgers mit zumindest einem der Zentriermittel und/oder zumindest einem der Ausrichtwinkel erfolgt.

Das Kanalfahrzeug kann den Ladungsträger an irgendeinem Ort innerhalb des Kanallagers aufnehmen und anschliessend zwecks Korrigieren der Position zur Zentrierstation fahren. Dies gilt auch dann, wenn die Zentrierstation von einem Lagerplatz des betreffenden Ladungsträgers weit entfernt angeordnet ist.

Die Zentrierstation ist ausgebildet, wie dies vorstehend für die geschilderten Ausführungsformen der Zentrierstation gemäss der vorliegenden Erfindung dargelegt wurde.

Das Aufnehmen des Ladungsträgers durch das Kanalfahrzeug kann beispielsweise aktiv erfolgen, indem das Kanalfahrzeug den Ladungsträger, welcher beispielsweise auf Tragschienen gelagert ist, unterfährt und mit Hilfe eines Hubmechanismus aufnimmt. Kanalfahrzeuge mit Hubmechanismus sind bekannt, der Hubmechanismus dient üblicherweise dazu, den Ladungsträger auf den Tragschienen abzusetzen oder von dort aufzunehmen.

Weiterhin kann dieses Aufnehmen auch beispielsweise passiv erfolgen, indem beispielsweise ein Gabelstapler, Regalbediengerät oder dergleichen den Ladungsträger auf dem Kanalfahrzeug absetzt.

Das Korrigieren der Position des Ladungsträgers kann in einer Drehung, d.h. einer reinen Rotation des Ladungsträgers gegenüber der vorherigen Position auf dem Kanalfahrzeug bestehen, oder in einem Verschieben, wobei auch eine horizontale Lage des Ladungsträgers relativ zum Kanalfahrzeug bzw. relativ zur vorherigen Position auf dem Kanalfahrzeug korrigiert wird.

Gemäss einer sehr einfachen Ausführungsform des Verfahrens fährt das mit dem Ladungsträger beladene Kanalfahrzeug in die Zentrierstation ein. Dies kann ohne zusätzliche Verfahrensschritte und ohne etwaige Steuerungs- oder Regelungs-Eingriffe erfolgen, indem das Kanalfahrzeug einfach bis zu den Ausrichtwinkeln oder bis zu einer vorbestimmten Position oder über eine vorbestimmte Strecke hinweg in der Zentrierstation einfährt. Ist der Ladungsträger fehlerhaft positioniert, beispielsweise verdreht oder verschoben gegenüber der gewünschten Position, so wird er beim Einfahren oder während des Durchquerens der Zentrierstation mit den Zentriermitteln in Kontakt treten und/oder am Ende des Zentrierkanals mit den Ausrichtwinkeln in Kontakt treten. Dieses In-Kontakt-Treten schiebt und/oder dreht den Ladungsträger in die gewünschte Position. Die Positionskorrektur erfolgt bei dieser einfachen Ausführungsform des Verfahrens vornehmlich oder ausschliesslich durch die in Längsrichtung abnehmende lichte Weite der Zentriermittel und/oder den Kontakt und vorzugsweise die Form der Ausrichtwinkel. Ein Absenken oder Anheben des Ladungsträgers ist hierbei nicht erforderlich.

Das Korrigieren der Position des Ladungsträgers auf dem Kanalfahrzeug, d.h. die Positionskorrektur, kann ferner und bevorzugt derart erfolgen, dass das Kanalfahrzeug den Ladungsträger in der Zentrierstation zumindest einmal absenkt und vorzugsweise anschliessend anhebt.

Dieses Absenken und Anheben erfolgt vorzugsweise durch den Hubmechanismus des Kanalfahrzeugs. Eine solche Positionskorrektur kann also mit dem als Bordmittel in zahlreichen Kanalfahrzeugen vorhandenen Hubmechanismus stattfinden und erfordert keine zusätzlichen Umbauten oder dergleichen. Ferner erfolgt die eigentliche Positionskorrektur durch ein Entlanggleiten des Ladungsträgers an den Zentriermitteln bzw. Abschnitten dieser Zentriermittel in negativer vertikaler Richtung (d.h. nach unten), wobei dieses Entlanggleiten letztlich durch die Schwerkraft bewirkt wird. Eine robuste Funktionsweise ist daher gewährleistet. Dasselbe gilt vorzugsweise für eine Positionskorrektur an den Ausrichtwinkeln.

Die Positionskorrektur erfolgt bei dieser Ausführungsform des Verfahrens vornehmlich oder ausschliesslich durch die in vertikaler Richtung nach unten, d.h. zur Fahrschiene hin, abnehmende lichte Weite der Zentriermittel. Wenn das Kanalfahrzeug den Ladungsträger, beispielsweise mit Hilfe des Hubmechanismus vertikal absenkt, kommt der Ladungsträger im Fall einer nicht ordnungsgemässen Positionierung auf dem Kanalfahrzeug mit den Zentriermitteln in Kontakt. Nach dem erstmaligen In-Kontakt-Treten mit zumindest einem der Zentriermittel wird der Ladungsträger während dem weiteren Absenk-Vorgang durch die Formgebung der Zentriermittel in die gewünschte Position verschoben und/oder gedreht. Hierbei können, abhängig von der Form des Ladungsträgers, zumindest eine Kante und/oder zumindest eine Ecke des Ladungsträgers mit zumindest einem der Zentriermittel in Kontakt treten.

Das vorbeschriebene Absenken und Anheben zwecks Positionskorrektur kann in Zentrierstationen mit und ohne Tragschienen erfolgen. Sind keine Tragschienen vorhanden, so setzt das Kanalfahrzeug den Ladungsträger am Ende des Absenk-Vorgangs nicht ab.

In Zentrierstationen ohne Tragschienen kann das Kanalfahrzeug den Ladungsträger über eine vorbestimmte Strecke hinweg vertikal absenken, wobei wie vorstehend beschrieben die Positionskorrektur erfolgt. Anschliessend kann das Kanalfahrzeug den korrekt auf seiner Oberseite positionierten Ladungsträger wieder anheben, wobei dieses Anheben in Zentrierstationen ohne Tragschienen nicht zwingend nötig ist.

In Zentrierstationen mit Tragschienen kann das Kanalfahrzeug den Ladungsträger soweit absenken, dass er auf den Tragschienen abgesetzt wird und ihn anschliessend wieder anheben. Ein Absetzen auf den Tragschienen meint hierbei vorzugsweise, dass der Ladungsträger nach diesem Absetzen und bis zu einem erneuten Anheben ausschliesslich auf den Tragschienen und nicht mehr auf dem Kanalfahrzeug gelagert ist. In Zentrierstationen mit Tragschienen kann, abhängig von der Ausgestaltung und Anordnung der Tragschienen innerhalb der Zentrierstation daran gedacht sein, den Ladungsträger vor dem Einfahren in die Zentrierstation anzuheben.

In sämtlichen Ausführungsvarianten kann das Absenken und auch das sich vorzugsweise anschliessende Anheben erfolgen, während das Kanalfahrzeug sich in Längsrichtung des Zentrierkanals bewegt, also während der Fahrt. Vorzugsweise stoppt das Kanalfahrzeug jedoch vor dem Absenken und Anheben und fährt erst danach wieder los.

Sämtliche Varianten des vorbeschriebenen Absenkens und des sich vorzugsweise anschliessenden Anhebens können entweder nur ein einziges Mal nach dem Einfahren des Kanalfahrzeugs in die Zentrierstation erfolgen oder, was bevorzugt ist, mehrfach hintereinander erfolgen.

So kann das Kanalfahrzeug nach einem ersten Absenken und Anheben des Ladungsträgers ein Stück weiter in Längsrichtung in die Zentrierstation einfahren. Je weiter das Kanalfahrzeug in Längsrichtung in die Zentrierstation einfährt, desto kleiner ist die lichte Weite zwischen den Zentriermitteln, welche wie vorstehend beschrieben in Längsrichtung abnimmt. Durch mehrfaches Absenken und optional anschliessendes Anheben kann eine stückweise Positionskorrektur erfolgen.

Die vorbeschriebene stückweise Positionskorrektur erlaubt es, Kanalfahrzeuge mit sehr kleinem Hub zu verwenden. Bei jedem Absenk-Vorgang kann ein Hub über eine vertikale Ausdehnung der Zentriermittel ausreichen.

Erfolgt nach dem Absenken jeweils ein nachstehend noch näher beschriebenes Absetzen des Ladungsträgers auf den Tragschienen, so kann nach einem letzten Absenken und vor einem letzten Anheben innerhalb der Zentrierstation eine Positionskorrektur und/oder eine Plausibilitätsprüfung einer von einem Geber im Fahrmotor erfassten Position des Kanalfahrzeugs mit Hilfe von Positionsmarkierungen innerhalb der Zentrierstation erfolgen, was nachstehend noch näher erläutert wird.

Nachdem die Position des Ladungsträgers und vorzugsweise die Position des Kanalfahrzeugs erfolgreich korrigiert wurde, insbesondere nach einem letzten Anheben des Ladungsträgers innerhalb der Zentrierstation, kann das Kanalfahrzeug mit dem korrekt positionierten Ladungsträger die Zentrierstation verlassen.

Das mit dem Ladungsträger beladene Kanalfahrzeug kann in eine Zentrierstation mit zumindest zwei in Längsrichtung verlaufenden Tragschienen für den Ladungsträger einfahren, wobei das Kanalfahrzeug durch den Eingang in Längsrichtung einfahren kann. Hierbei kann das Kanalfahrzeug den Ladungsträger während des Einfahrens in die Zentrierstation zumindest einmal soweit absenken, dass der Ladungsträger auf den Tragschienen abgesetzt wird. Anschliessend kann das Kanalfahrzeug den Ladungsträger wieder anheben. Dies wurde vorstehend bereits beschrieben.

Das mit dem Ladungsträger beladene Kanalfahrzeug kann in eine Zentrierstation in Längsrichtung einfahren, wobei die Zentrierstation endseitig gegenüber dem Eingang zumindest einen Ausrichtwinkel aufweist. Das Kanalfahrzeug kann derart in den Zentrierkanal einfahren, dass der Ladungsträger mit zumindest einem Ausrichtwinkel in Kontakt tritt.

Das Kanalfahrzeug kann den Ladungsträger absenken, unmittelbar nachdem ein Kontakt zwischen dem Ladungsträger und zumindest einem der Zentriermittel erfolgt ist. Das Absenken erfolgt also erst dann, wenn ein Kontakt zwischen Ladungsträger und zumindest einem der Zentriermittel festgestellt wurde. Vorzugsweise ist hierbei also daran gedacht, das In-Kontakt-Treten zwischen Ladungsträger und einem der Zentriermittel festzustellen und anschliessend das Absenken auszulösen.

Dieses In-Kontakt-Treten kann direkt oder indirekt festgestellt bzw. erfasst werden.

Eine indirekte Erfassung kann durch Beobachtung eines Laststroms und/oder eines Drehmoments eines Fahrmotors des Kanalfahrzeugs erfolgen. Beide steigen signifikant an, wenn das Kanalfahrzeug durch ein Hindernis gestoppt oder gebremst wird. Überschreiten das Drehmoment und/oder der Laststrom einen vorbestimmten Wert, so wird dies als Kontakt zwischen dem Ladungsträger und zumindest einem der Zentriermittel aufgefasst und der vorbeschriebene Absenk-Vorgang ausgelöst. Der vorbestimmte Laststrom, dessen Überschreitung den Absenk-Vorgang auslöst, kann beispielsweise bei 80% Überstrom liegen, also bei 180% des als üblich aufgefassten Laststroms.

Tritt beispielsweise der auf dem Kanalfahrzeug befindliche Ladungsträger mit dem Zentriermittel in Kontakt, so wird, insbesondere abhängig von einer Haftreibungskraft zwischen Ladungsträger und Oberseite des Kanalfahrzeugs, sich der Laststrom erhöhen, auch wenn nur der Ladungsträger und nicht das Kanalfahrzeug selbst mit dem Zentriermittel in Kontakt tritt.

Alternativ kann eine verlangsamte Bewegung oder ein ungeplantes Abbremsen bis hin zu einem ungeplanten Stillstand des Kanalfahrzeugs als indirekte Erfassung des In-Kontakt-Tretens mit dem Zentriermittel genutzt werden und den Absenk-Vorgang auslösen. Ein solches Abbremsen oder ein solcher Stillstand können durch ein In-Kontakt-Treten mit einem Zentriermittel bewirkt werden. Es kann also daran gedacht sein, beispielsweise eine Geschwindigkeit des Kanalfahrzeugs zu überwachen.

Weitere Alternativen für eine indirekte Erfassung sind denkbar.

Eine direkte Überwachung des In-Kontakt-Tretens zwischen Ladungsträger und Zentriermittel kann über Sensoren erfolgen, welche an geeigneter Stelle nahe oder innerhalb der Zentrierstation und/oder im oder am Ladungsträger und/oder am Kanalfahrzeug befestigt sind. Üblicherweise sind derartige Sensoren nahe oder innerhalb der Zentrierstation und/oder am Kanalfahrzeug angeordnet. Eine Anordnung von zumindest einem Sensor in oder an dem Ladungsträger stellt ein seltenes, von der vorliegenden Erfindung aber dennoch umfasstes Ausführungsbeispiel dar.

Unabhängig davon, wo die vorgenannten Sensoren angeordnet sind, kann beispielsweise an mechanische Sensoren, resistive Sensoren, piezoelektrische Sensoren, kapazitive Sensoren, induktive Sensoren, optische Sensoren, akustische Sensoren oder magnetische Sensoren gedacht sein. Als optische Sensoren kommen beispielsweise Lichttaster in Frage, welche auf eine gewisse Distanz eingestellt sein können.

Wie vorstehend ausführlich beschrieben, kann das Absenken erfolgen, nachdem ein In-Kontakt-Treten zwischen Ladungsträger und einem der Zentriermittel festgestellt wurde. Zusätzlich oder alternativ kann das Absenken innerhalb der Zentrierstation nach einem vorgegebenen Schema erfolgen. Wird ein solches vorgegebenes Schema genutzt, so können einfacher gebaute und somit oft günstigere Fahrmotoren, Steuerungen und Sensoren verwendet werden.

Ein Absenken und Anheben nach einem festen Schema kann beispielsweise erfolgen, indem das Kanalfahrzeug sich innerhalb der Zentrierstation um eine vorgegebene Strecke in Längsrichtung bewegt, beispielsweise über 100 Millimeter hinweg. Anschliessend kann ein Absenken und Anheben des Ladungsträgers erfolgen. Dieser Vorgang kann sich wiederholen, bis das Kanalfahrzeug an dem Ende des Zentrierkanals angekommen ist, welches dem Eingang gegenüberliegt. Allgemein kann also daran gedacht sein, eine Schrittweite festzustellen und über eine maximale Strecke hinweg zu begrenzen. Dies kann beispielsweise die vorbeschriebene Überstrom-Messung ersetzen oder ergänzen.

Soll ein vorbeschriebenes Schema zusätzlich zu einer Erfassung des In-Kontakt-Tretens erfolgen, so kann beispielsweise daran gedacht sein, dass das Kanalfahrzeug innerhalb des Zentrierkanals den Ladungsträger immer dann absenkt, wenn ein In-Kontakt-Treten erfasst wurde, spätestens jedoch, wenn sich das Kanalfahrzeug über eine vorbestimmte Strecke in Längsrichtung hinweg bewegt hat. Diese vorbestimmte Strecke kann beispielsweise 200 Millimeter betragen. In diesem Ausführungsbeispiel würde also spätestens alle 200 Millimeter ein Absenken und Anheben erfolgen, selbst wenn in der Zentrierstation überhaupt kein In-Kontakt-Treten zwischen Ladungsträger und Zentriermittel erfasst wird.

Das Korrigieren der Position des Ladungsträgers auf dem Kanalfahrzeug durch Einfahren in die Zentrierstation kann immer dann erfolgen, wenn entweder eine Positionskorrektur als notwendig erkannt wird oder wenn eine vorbestimmte Anzahl an Umlagerungen erfolgt ist. Eine Steuerung kann also bewirken, dass das Kanalfahrzeug immer dann und vorzugsweise nur dann in den Zentrierkanal einfährt, wenn dies für nötig erachtet wird.

Die Notwendigkeit einer Positionskorrektur kann über geeignete Sensoren festgestellt werden. Auch hierbei kann beispielsweise an mechanische Sensoren, resistive Sensoren, piezoelektrische Sensoren, kapazitive Sensoren, induktive Sensoren, optische Sensoren, akustische Sensoren oder magnetische Sensoren gedacht sein. Diese Sensoren können am Kanalfahrzeug oder irgendwo im Kanallager befestigt sein.

So kann daran gedacht sein, dass das Kanalfahrzeug nach Aufnahme eines Ladungsträgers eine im Kanallager befindliche Mess-Station durchfährt, welche mit geeigneten Sensoren feststellt, ob eine Positionskorrektur nötig ist. Hierbei kann beispielsweise eine Konturenkontrolle des Ladungsträgers erfolgen, welche mit einer Konturenkontrolle der Ladung auf dem Ladungsträger kombiniert werden kann.

Enthält das Kanalfahrzeug zumindest einen Sensor, mittels dem die Notwendigkeit einer Positionskorrektur festgestellt werden soll, so kann beispielsweise an einen optischen Sensor gedacht sein. Ein solcher optischer Sensor kann so ausgerichtet und eingerichtet sein, dass er im unbeladenen Zustand und im ordnungsgemäss beladenen Zustand, wenn sich der Ladungsträger in der gewünschten Position auf dem Kanalfahrzeug befindet, nicht auslöst bzw. nichts detektiert. Ragt der Ladungsträger jedoch wegen einer Rotation und/oder einer Verschiebung im Vergleich zur gewünschten Position auf dem Kanalfahrzeug über diese gewünschte Position hinaus und in einen Erfassungsbereich des optischen Sensors hinein, so kann dies vom optischen Sensor detektiert werden. Dasselbe Prinzip kann auch mit Sensoren umgesetzt werden, die nach einem anderen Wirkprinzip arbeiten als optische Sensoren. Es kann daran gedacht sein, dass der vorbeschriebene Sensor nicht nur die Anwesenheit eines Objekts in dem Erfassungsbereich digital feststellt (Objekt vorhanden / Objekt nicht vorhanden), sondern auch die Entfernung zwischen Sensor und Objekt erfasst. Dann kann berechnet werden, ob lediglich die Ladung über den Ladungsträger hinausragt, oder ob tatsächlich der Ladungsträger ausserhalb der gewünschten Position liegt.

Unter einer Umlagerung wird im Rahmen der vorliegenden Erfindung insbesondere jeder Vorgang verstanden, bei welchem der Ladungsträger durch das Kanalfahrzeug von einem Ort innerhalb des Kanallagers zu einem zweiten Ort innerhalb des Kanallagers verbracht wird. Die Anzahl erfolgter Umlagerungen eines Ladungsträgers kann über einen geeigneten Zähler erfasst werden. Derartige Umlagerungen führen oftmals zu zumindest geringfügigen Fehlpositionierungen der Ladungsträger, sowohl auf den Tragschienen als auch auf dem Kanalfahrzeug. Nach einer Vielzahl von Umlagerungen summieren sich selbst geringfügige Fehlpositionierungen des Ladungsträgers oftmals zu einer signifikanten, den ordnungsgemässen Betrieb gefährdenden Fehlpositionierung, welche eine Positionskorrektur nötig macht.

Es kann daran gedacht sein, dass für jeden, beispielsweise mit einem geeigneten Identifikator ausgestatteten Ladungsträger erfasst wird, wie oft er seit der letzten Positionskorrektur umgelagert oder anderweitig bewegt wurde. Die vorbestimmte Anzahl an Umlagerungen oder Bewegungen, nach welcher eine Positionskorrektur erfolgt, kann beispielsweise bei fünf Umlagerungen liegen. Die genaue Anzahl kann abhängig von den im Kanallager herrschenden Bedingungen und den Anforderungen an die ordnungsgemässe Positionierung der Ladungsträger, von der Art der Ladungsträger, von einer Montagetoleranz sowie einer Bauweise des Lagers gewählt werden.

Es kann daran gedacht sein, nicht nur den Ladungsträger, sondern auch das Kanalfahrzeug innerhalb der Zentrierstation korrekt zu positionieren, falls nötig. Hierbei kann daran gedacht sein, dass das Kanalfahrzeug eine innerhalb der Zentrierstation angeordnete Positionsmarkierung erfasst. Als Positionsmarkierungen kommen Codes, insbesondere optische lesbare Codes wie QR-Codes, Barcodes etc. in Frage. Ferner kann auch an andere optisch erfassbare Positionsmarkierungen gedacht sein, wie beispielsweise Löcher, Erhebungen, Striche, etc. Die korrekte Positionierung kann alternativ mit beliebigen geeigneten Paarungen aus zumindest einem im Kanalfahrzeug verbauten Sensor und zumindest einer in der Zentrierstation angeordneten Positionsmarkierung erfolgen. Neben optischen Sensoren kommen hierbei mechanische Sensoren, magnetische Sensoren, akustische Sensoren etc. in Frage. Üblicherweise, und bevorzugt auch im Rahmen der vorliegenden Erfindung, werden Kanalfahrzeuge zunächst über einen Geber im Fahrmotor positioniert, welcher letztlich Umdrehungen der Räder zählt. Auf Grund von Schlupf, sich veränderndem Rad-Durchmesser etc. kann es vorkommen, dass die vorgegebene Umrechnung von der Anzahl der Radumdrehungen zur gefahrenen Strecke nicht mehr korrekt ist. Mit Hilfe der vorbeschriebenen Positionsmarkierung und dem Sensor im Kanalfahrzeug kann dieses Problem überwunden werden. Die Paarung aus zumindest einem der vorbeschriebenen Sensoren und zumindest einer Positionsmarkierung in der Zentrierstation kann also die basierend auf den Geber-Daten ermittelte Position des Kanalfahrzeugs korrigieren. Auch eine Plausibilitätsprüfung ist möglich.

Die Position des Kanalfahrzeugs kann beispielsweise derart korrigiert werden, dass der vorbeschriebene Sensor die vorbeschriebene Positionsmarkierung erfasst und anschliessend geprüft wird, ob sich das Kanalfahrzeug in Bezug auf die Positionsmarkierung in der gewünschten Position, beispielsweise im gewünschten Abstand befindet. Falls nötig kann eine Korrektur der Position des Kanalfahrzeugs erfolgen.

Die Position des Kanalfahrzeugs kann alternativ beispielsweise derart korrigiert werden, dass sich das Kanalfahrzeug an einem geeigneten Ort innerhalb der Zentrierstation so lange in Längsrichtung bewegt, bis der vorbeschriebene Sensor die vorbeschriebene Positionsmarkierung erfasst. Die Erfassung der Positionsmarkierung signalisiert in diesem Fall, dass das Kanalfahrzeug korrekt positioniert ist.

Umfasst das vorbeschriebene Verfahren ein Absetzen des Ladungsträgers auf den Tragschienen und ein anschliessendes Anheben, so erfolgt die Positionskorrektur des Kanalfahrzeugs mit Hilfe der zumindest einen Positionsmarkierung vorzugsweise nach dem letzten Absetzen des Ladungsträgers und vor dem letzten Anheben des Ladungsträgers, d.h. vorzugsweise unmittelbar bevor das Kanalfahrzeug die Zentrierstation mit dem korrekt positionierten Ladungsträger wieder verlässt.

Geeignete Steuerungs- und Regelungseinrichtungen für Kanalfahrzeuge sowie Lagersteuerungen zur Steuerung sämtlicher Komponenten eines Kanallagers sind aus dem Stand der Technik bekannt. Mit solchen Steuerungs- und Regelungseinrichtungen lassen sich sämtliche Verfahrensschritte der vorbeschriebenen Varianten des erfindungsgemässen Verfahrens steuern und regeln.

### Figurenbeschreibung

Weitere Vorteile, Merkmale und Einzelheiten der Erfindung ergeben sich aus der nachfolgenden Beschreibung bevorzugter Ausführungsbeispiele von Zentrierstationen sowie anhand der Zeichnungen. Diese zeigen in den Figuren 1 bis 4 verschiedene Ansichten eines Zentrierkanals 1 mit und ohne Ladungsträger 2; in den Figuren 5 bis 8 schematisch verschiedene Anordnungen des Ladungsträgers 2 relativ zu einer gewünschten Position 10; in den Figuren 9 bis 11, 15 und 17 schematisch verschiedene Querschnitte durch Tragschienen 6 und angrenzende Zentriermittel 5 sowie in den Figuren 12 bis 14 und 16 verschiedene Längsschnitte durch Tragschienen 6 und angrenzende Zentriermittel 5.

Der besseren Übersicht halber sind nicht in allen Figuren sämtliche Merkmale mit Bezugsziffern versehen.

Den Figuren ist jeweils ein Koordinatensystem zugeordnet. Ist von einer positiven Richtung die Rede, so ist die Richtung gemeint, in welche die Pfeile des Koordinatensystems zeigen. Ist von einer negativen Richtung die Rede, so ist die entgegengesetzte Richtung gemeint.

### Ausführungsbeispiel

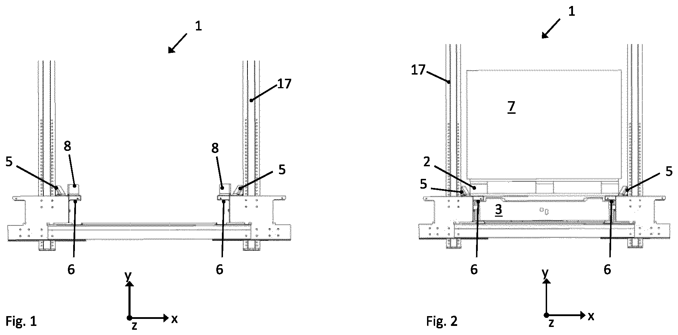

In Figur 1 ist der Zentrierkanal 1 in geschnittener Darstellung gezeigt. Figur 2 zeigt den Zentrierkanal 1 nach Figur 1, in welchen ein beladenes Kanalfahrzeug 3 eingefahren ist.

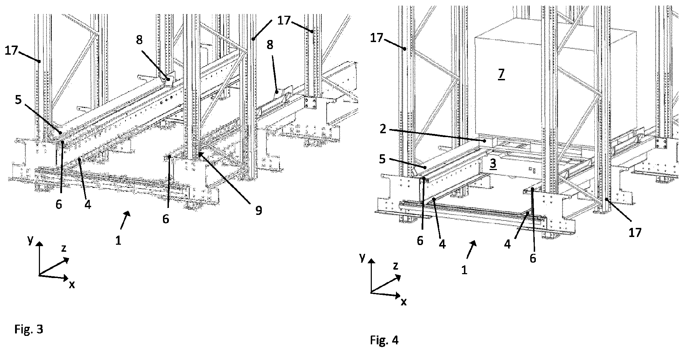

Figur 3 zeigt die Anordnung nach Figur 1 in perspektivischer Ansicht; Figur 4 zeigt die Anordnung nach Figur 2 in perspektivischer Ansicht.

Die Figuren 4 bis 17 sind stark vereinfachte schematische Ansichten, welche einzelne Aspekte von Ausführungsformen der vorliegenden Erfindung zeigen.

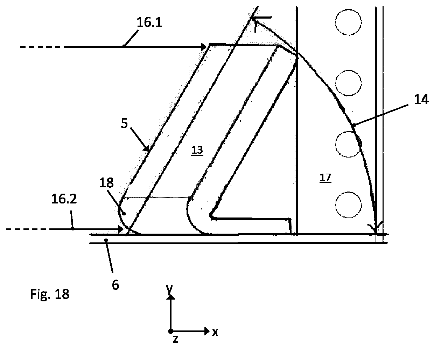

Figur 18 zeigt eine schematische perspektivische Ansicht eines Zentriermittels 5.

Aus den Figuren 3 und 4 geht hervor, dass der Zentrierkanal 1 bekannten Kanälen von Kanallagern ähnelt. Insbesondere umfasst der Zentrierkanal 1 in dem gezeigten bevorzugten Ausführungsbeispiel, ebenso wie bekannte Kanäle, parallel zueinander verlaufende Fahrschienen 4 und parallel zueinander verlaufende Tragschienen 6. In den Figuren 3 und 4 ist erkennbar, dass die Zentriermittel 5 an einem äusseren Rand des Zentrierkanals 1, unmittelbar benachbart zu Regalpfosten 17 (auch "Regalsteher" genannt) verlaufen.

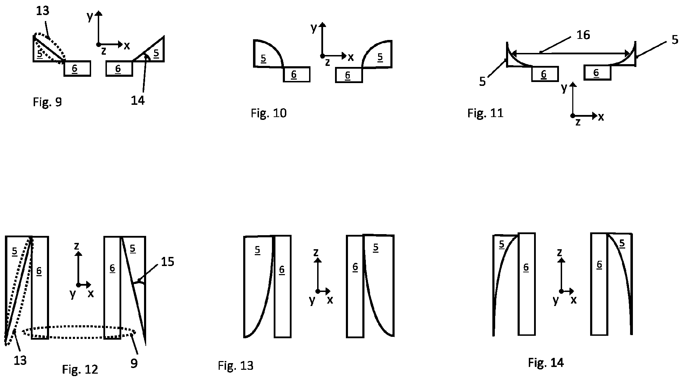

Aus den Figuren 1 bis 4 und 9 bis 18 geht deutlich hervor, dass eine in einer Querrichtung x gemessene lichte Weite 16 zwischen den Zentriermitteln 5 sowohl in Längsrichtung z als auch in negativer vertikaler Richtung y abnimmt. Die lichte Weite 16 ist der besseren Übersicht halber nicht in sämtlichen Figuren, sondern ausschliesslich in den Figuren 11 und 18 mit einer entsprechenden Bezugsziffer eingezeichnet. Gemeint ist jedoch stets die in Querrichtung x gemessene lichte Weite zwischen den Zentriermitteln 5.

Die negative vertikale Richtung y meint hierbei in Richtung auf die in den Figuren 9 bis 11 nicht gezeigten Fahrschienen zu, welche üblicherweise unterhalb der Tragschienen 6 angeordnet sind. Abschnitte 13 der Zentriermittel 5, welche mit dem Ladungsträger 2 in Kontakt treten können, sind nur in den Figuren 9, 12, 15, 16, 17 und 18 gesondert eingezeichnet. Diese Abschnitte 13 sind aber auch in den Ausführungsformen gemäss den Figuren 10, 11, 13 und 14 beidseits vorhanden, jedoch nicht gesondert mit Bezugsziffern hervorgehoben.

In der Ausführungsform nach Figur 9 sind die Abschnitte 13 der Zentriermittel 5 im Querschnitt, d.h. in der x-y-Ebene, als Strecken ausgebildet. Diese Zentriermittel 5 könnten auch als Zentrierschrägen bezeichnet werden. Wie in Figur 9 auf der rechten Seite angedeutet, ist der als Strecke ausgebildete Abschnitt 13 zur Querrichtung x, d.h. zu einer Horizontalen, in einem Winkel 14 geneigt.

Die den Abschnitten 13 in Figur 9 entsprechenden Abschnitte der Zentriermittel 5 in den Figuren 10 und 11 sind als Kreisbögen ausgebildet. Diese kreisbogenförmigen Abschnitte sind der Übersicht halber nicht mit der Bezugsziffer 13 versehen.

In Figur 12 sind die Abschnitte 13 der Zentriermittel 5 im Längsschnitt, d.h. in der x-z-Ebene, als Strecken ausgebildet.

Die den Abschnitten 13 in Figur 12 entsprechenden (dort nicht mit Bezugsziffern versehenen) Abschnitte der Zentriermittel 5 in den Figuren 13 und 14 sind als Äste einer Parabel ausgebildet.

Die (dort nicht mit Bezugsziffern versehenen) Abschnitte der Zentriermittel 5, welche mit dem Ladungsträger 2 in Kontakt treten können, sind in den Figuren 10 und 13 konvex, in den Figuren 11 und 14 konkav ausgebildet.

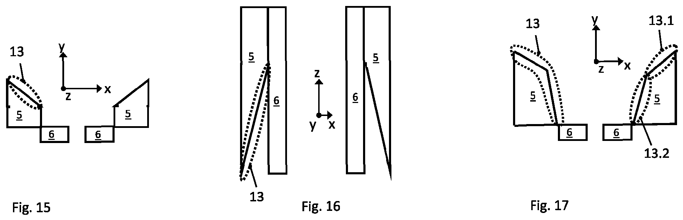

In Figur 15 ist exemplarisch gezeigt, dass in negativer vertikaler Richtung y (d.h. nach unten) konvergierende Abschnitte 13, welche der Positionskorrektur dienen, sich im Querschnitt nicht über die gesamte vertikale Richtung y erstrecken müssen. Die Zentriermittel 5 können auch Abschnitte umfassen, welche parallel zur vertikalen Richtung y verlaufen. In diesen parallel zur vertikalen Richtung y verlaufenden Abschnitten bleibt die lichte Weite konstant.

In Figur 16 ist exemplarisch gezeigt, dass in Längsrichtung z konvergierende Abschnitte 13, welche der Positionskorrektur dienen, sich im Längsschnitt nicht über die gesamte Längsrichtung z erstrecken müssen. Die Zentriermittel 5 können auch Abschnitte umfassen, welche parallel zur Längsrichtung z verlaufen. In diesen parallel zur Längsrichtung z verlaufenden Abschnitten bleibt die lichte Weite konstant.

In Figur 17 ist exemplarisch gezeigt, dass Abschnitte 13, welche der Positionskorrektur dienen, sich im Querschnitt auch als Hintereinanderreihung mehrerer Formen, hier konkret zweier Strecken, darstellen können. Die lichte Weite zwischen den Zentriermitteln 5 nimmt in negativer y-Richtung zwar kontinuierlich ab. Da ein erster Teilabschnitt 13.1 einen kleineren Neigungswinkel zur Quer-Richtung x (d.h. zur Horizontalen) aufweist als ein zweiter Teilabschnitt 13.2, ist der Grad dieser Abnahme der lichten Weite im Bereich des ersten Teilabschnitts 13.1 stärker als im Bereich des zweiten Teilabschnitts 13.2.

Im Vergleich zu den Figuren 9 bis 14 nimmt die lichte Weite zwischen den Zentriermitteln 5 also bei den Ausführungsbeispielen, welche in den Figuren 15 und 16 gezeigt sind, nicht über die gesamte negative vertikale Richtung y bzw. über die gesamte Länge des Zentrierkanals 1 hinweg kontinuierlich ab.

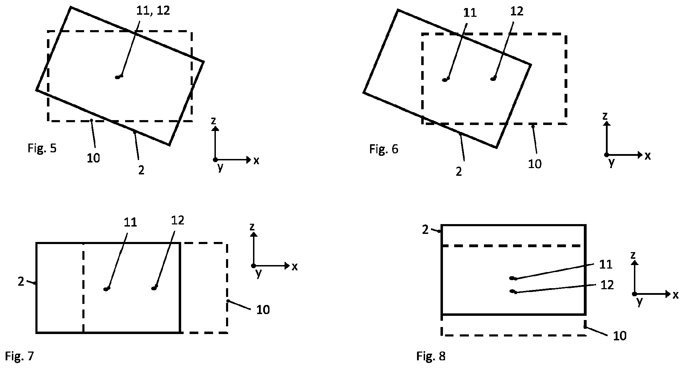

In den Figuren 5 bis 8 sind schematisch einige mögliche fehlerhafte Positionen des Ladungsträgers 2 im Vergleich zur gewünschten Position 10 dargestellt. Unter der "gewünschten Position 10" wird hierbei vorzugsweise die gewünschte Position 10 auf dem Kanalfahrzeug 3 verstanden. Die Figuren 5 bis 8 sollen nur schematisch verdeutlichen, wie eine Verschiebung und/oder eine Rotation des Ladungsträgers 2 im Vergleich zur gewünschten Position 10 korrigierbar ist.

In Figur 5 fallen ein Mittelpunkt 11 des Ladungsträgers 2 und ein Mittelpunkt 12 der gewünschten Position 10 zusammen. Die Fehlpositionierung des Ladungsträgers 2 in Figur 5 besteht also ausschliesslich in einer Drehung (hier im Uhrzeigersinn) im Vergleich zur gewünschten Position 10.

In Figur 6 besteht die Fehlpositionierung des Ladungsträgers 2 in der in Figur 5 bereits gezeigten Drehung und einer zusätzlichen Verschiebung in negativer x-Richtung (Quer-Richtung), d.h. nach links in Figur 6.

In Figur 7 besteht die Fehlpositionierung des Ladungsträgers 2 ausschliesslich in einer Verschiebung in negativer x-Richtung, d.h. nach links in Figur 7.

In Figur 8 besteht die Fehlpositionierung des Ladungsträgers 2 ausschliesslich in einer Verschiebung in Längsrichtung z, d.h. in Figur 8 nach oben.

Üblicherweise verläuft eine Wirkrichtung einer Schwerkraft in negativer vertikaler Richtung y, eine Horizontalebene ist vorzugsweise die x-z-Ebene. Oberflächen von Fahrschienen 4 und Tragschienen 6, welche mit Rädern des Kanalfahrzeugs 3 in Kontakt treten bzw. den Ladungsträger 2 tragen und lagern können, verlaufen vorzugsweise parallel zur Horizontalebene.

Ein die Längsrichtung z andeutender Pfeil des Koordinatensystems verläuft in den Figuren 12 bis 14 durch eine Mitte des dort nur schematisch durch die Anordnung der Zentriermittel 5 und Tragschienen 6 angedeuteten Zentrierkanals.

Aus den Figuren 1 und 3 geht hervor, dass Ausrichtwinkel 8 bzw. eine diese Ausrichtwinkel 8 verbindende Gerade im Wesentlichen quer zur Längsrichtung z, d.h. in Querrichtung x verläuft. Die Ausrichtwinkel 8 bilden sozusagen das Ende eines als Sackgasse ausgebildeten Zentrierkanals 1.

Der in Figur 9 gezeigte Winkel 14 kann zwischen 45° und 85° liegen.

Der in Figur 12 gezeigte Winkel 15 kann zwischen 0,1° und 10° liegen.

Die in den Figuren 3 und 4 dargestellten Zentriermittel 5 können eine Ausdehnung in Längsrichtung von beispielsweise etwa 1600 Millimetern aufweisen, was der doppelten Breite einer Palette entspricht. Somit könnten in einer derart dimensionierten Zentrierstation zwei quer orientierte Paletten hintereinander Platz finden.

Die mit dem Ladungsträger 2 in Kontakt tretenden Abschnitte der Zentriermittel 5 in der Ausführungsformen gemäss der Figur 13 sind geformt wie Äste einer nach oben geöffneten Parabel. Die entsprechenden Abschnitte der Zentriermittel 5 in der Ausführungsform nach Figur 14 sind geformt wir Äste einer nach unten geöffneten Parabel.

In Figur 18 ist ein Zentriermittel 5 im Detail dargestellt, die Tragschiene 6 ist nur andeutungsweise gezeigt. Ferner sind der Regalpfosten 17 und der Winkel 14 zwischen der Querrichtung x und dem Abschnitt 13 des Zentriermittels 5 zu erkennen. In Figur 18 ist deutlich zu erkennen, dass der Abschnitt 13 den wesentlichen Teil des Zentriermittels 5 ausmacht, welcher mit dem Ladungsträger 2 in Kontakt treten kann. Konstruktions- und fertigungsbedingt existiert jedoch unterhalb des Abschnitts 13 ein umgebogener Abschnitt 18. In negativer vertikale Richtung y, in Figur 18 als nach unten, nimmt die lichte Weite 16 entlang dieses umgebogenen Abschnitts 18 zur Tragschiene 6 hin zu. Dies beeinträchtigt jedoch die Positionskorrektur nicht, da die vertikale Ausdehnung des Abschnitts 18 im Vergleich zur vertikalen Ausdehnung des Abschnitts 13 vernachlässigbar ist. Ferner ist die lichte Weite 16.2 im untersten Bereich, in dem der umgebogene Abschnitt 18 mit der Tragschiene 6 in Kontakt steht, deutlich kleiner als die lichte Weite 16.1 im gegenüberliegenden obersten Bereich.

### Bezugnehmend auf die Figuren 1 bis 18 erklärt sich die Funktionsweise der erfindungsgemässen Zentrierstation folgendermassen:

Das Kanalfahrzeug 3, welches mit dem Ladungsträger 2 beladen ist, fährt zwecks Positionskorrektur auf den Fahrschienen 4 in den Zentrierkanal 1 ein.

Im gezeigten Ausführungsbeispiel handelt es sich um einen Ladungsträger 2 in Form einer Palette, welche mit einer Ladung 7 beladen ist.

Die Positionskorrektur findet hierbei in der Weise statt, wie sie bereits ausführlich im vorangehenden Abschnitt "Lösung der Aufgabe" beschrieben wurde und nachfolgend daher nur kurz mit Bezug auf die Figuren erläutert wird.

Das Kanalfahrzeug 3 fährt zwecks Positionskorrektur in den Zentrierkanal 1 ein.

Liegt die in Figur 7 gezeigte Fehlpositionierung des Ladungsträgers 2 vor, so kann diese auf zwei Weisen im Zentrierkanal 1 korrigiert werden.

Zum einen kann der Ladungsträger 2 im Zentrierkanal 1 in die gewünschte Position gebracht werden (was teilweise als "zentrieren" bezeichnet wird), indem das Kanalfahrzeug 3 ihn in negativer vertikaler Richtung y absenkt, so dass er an Abschnitten 13 der Zentriermittel 5 in negativer vertikaler Richtung y entlanggleiten kann. Hierzu sei auf die Figuren 9, 15, 17 und 18 verwiesen, wo exemplarisch solche Abschnitte 13 angedeutet sind. In Bezug auf Figur 7 tritt also eine links gezeigte, im Wesentlichen in Längsrichtung z verlaufende Kante des Ladungsträgers 2 mit dem Abschnitt 13 des Zentriermittels 5 in Kontakt. Beim Absenken des Ladungsträgers 2 in negativer vertikaler Richtung y wird der Ladungsträger 2 durch das Entlanggleiten auf dem links in den Figuren 9, 15 und 17 gezeigten Abschnitt 13 des Zentriermittels 5 in positiver x-Richtung, d.h. nach rechts, verschoben.

Zum anderen kann die Positionskorrektur erfolgen, während das Kanalfahrzeug 3 in Längsrichtung z den Zentrierkanal 1 passiert, wobei eine in Figur 7 sichtbare linke obere Ecke der oben erwähnten Kante des Ladungsträgers 2 beispielsweise mit dem in Figur 12 gezeigten Abschnitt 13 in Kontakt tritt.

In beiden Fällen würde der in Figur 7 gezeigte Ladungsträger 2, welcher unerwünschterweise zu weit links liegt, durch eine Verschiebung nach rechts, d.h. in positiver x-Richtung, zentriert.

Die vorbeschriebenen Wirkprinzipien der Positionskorrektur können einzeln oder gemeinsam sowie nacheinander oder gleichzeitig zum Tragen kommen. Hält das Kanalfahrzeug 3 innerhalb des Zentrierkanals 1 an, um den Ladungsträger 2 wie beschrieben abzusenken, so wirkt das mit Bezug auf Figur 9 beschriebene Wirkprinzip der Positionskorrektur. Durchfährt das Kanalfahrzeug 3 den Zentrierkanal 1 ohne anzuhalten, so wirkt das mit Bezug auf Figur 12 beschriebene Wirkprinzip.

Durchfährt das Kanalfahrzeug 3 den Zentrierkanal 1 zunächst über eine gewisse Strecke hinweg, so kann zunächst das mit Bezug auf Figur 12 beschriebene Wirkprinzip zum Tragen kommen. Hält das Kanalfahrzeug 3 dann an, um den Ladungsträger 2 abzusenken, so kommt danach das mit Bezug auf Figur 9 beschriebene Wirkprinzip zum Tragen. Hält das Kanalfahrzeug 3 zwecks Absenken des Ladungsträgers 2 jedoch nicht an, sondern senkt diesen während der in Längsrichtung z verlaufenden Fahrt in entgegengesetzter vertikaler Richtung y ab, so kommen beide vorgenannten Wirkprinzipien gleichzeitig zum Einsatz.

Das mit Bezug auf Figur 9 beschriebene Wirkprinzip kommt ebenfalls zum Tragen, wenn die Zentriermittel 5 gemäss den Figuren 10, 11, 15, 17 oder 18 ausgestaltet sind.

Das mit Bezug auf Figur 12 beschriebene Wirkprinzip kommt ebenfalls zum Tragen, wenn die Zentriermittel 5 gemäss den Figuren 13, 14 oder 16 ausgestaltet sind.

Liegt die in Figur 5 gezeigte Fehlpositionierung des Ladungsträgers 2 vor, so kann diese im Wesentlichen auf dieselbe Weise korrigiert werden, wie dies vorstehend in Bezug auf Figur 7 geschildert wurde. Hierbei werden üblicherweise die in Figur 5 sichtbare linke untere Ecke des Ladungsträgers 2, welche in negativer x-Richtung (Quer-Richtung) über die gewünschte Position 10 hinweg nach links aussen ragt, sowie die rechte obere Ecke des Ladungsträgers 2, welche in positiver x-Richtung (Quer-Richtung) über die gewünschte Position 10 hinweg nach rechts aussen ragt, mit den Abschnitten 13 der Zentriermittel 5 in Kontakt treten. Dieses In-Kontakt-Treten bewirkt dann auf die bereits mit Blick auf Figur 7 beschriebene Weise die Positionskorrektur. Beim Absenken des Ladungsträgers 2 in negativer vertikaler Richtung y würde der Ladungsträger 2 durch das Entlanggleiten auf den Abschnitten 13 der Zentriermittel 5 eine Drehung entgegen dem Uhrzeigersinn vollziehen. Diese Positionskorrektur durch Drehung entgegen dem Uhrzeigersinn erfolgt so lange, bis ein in Figur 5 gezeigter Umriss des Ladungsträgers 2 mit der gewünschten Position 10 zusammenfällt

Liegt die in Figur 6 gezeigte Fehlpositionierung des Ladungsträgers 2 vor, so kann diese im Wesentlichen auf dieselbe Weise korrigiert werden, wie dies vorstehend in Bezug auf die Figuren 5 und 7 geschildert wurde. Hierbei werden üblicherweise die links in Figur 6 gezeigte Kante des Ladungsträgers 2 und/oder zumindest eine der beiden an diese Kante angrenzenden Ecken mit dem Abschnitt 13 des Zentriermittels 5 in Kontakt treten, um die Positionskorrektur durchzuführen. Beim Absenken des Ladungsträgers 2 in negativer y-Richtung erfolgt dann eine Drehung entgegen dem Uhrzeigersinn und eine Verschiebung in positiver x-Richtung, d.h. nach rechts in Figur 6, bis der Ladungsträger 2 in der gewünschten Position 10 liegt.

Liegt die in Figur 8 gezeigte Fehlpositionierung vor, so kann diese durch In-Kontakt-Treten mit den Ausrichtwinkeln 8 korrigiert werden. Dasselbe gilt auch für jegliche Fehlpositionierungen, bei denen zumindest ein Teil des Ladungsträgers 2 in Längsrichtung z über die gewünschte Position 10 hinaus ragt, was in den schematischen Beispielen der Figuren 5 und 6 der Fall ist. Bei den Beispielen gemäss den Figuren 5 und 6 kann durch In-Kontakt-Treten mit den Ausrichtwinkeln 8 jedoch im Wesentlichen nur eine Positionskorrektur des Ladungsträgers in negativer Längsrichtung z erfolgen. Eine in den Beispielen gemäss diesen Figuren ebenfalls nötige Korrektur in Querrichtung x erfordert üblicherweise ein In-Kontakt-Treten mit zumindest einem Zentriermittel 5.

Aus Figur 3 geht hervor, dass die Ausrichtwinkel 8 in negativer Längsrichtung z, d.h. zum Eingang hin, abfallend ausgebildet sind. In einem in der y-z-Ebene liegenden Querschnitt sind die in Figur 3 gezeigten Ausrichtwinkel 8 also ähnlich oder identisch ausgebildet wie die Zentriermittel 5 in einem Querschnitt in der y-x-Ebene. Eine Positionskorrektur des gemäss Figur 8 fehlpositionierten Ladungsträgers 2 kann beispielsweise erfolgen, indem das Kanalfahrzeug in Längsrichtung z so weit in den Zentrierkanal 1 einfährt, dass die in Figur 8 sichtbare obere Kante des Ladungsträgers 2, welche parallel zur x-Achse verläuft, mit den Ausrichtwinkeln 8 in Kontakt tritt und der Ladungsträger 2 durch diesen Kontakt auf dem Kanalfahrzeug in negativer z-Richtung derart verschoben wird, dass er in der gewünschten Position 10 zum Liegen kommt. Zusätzlich oder alternativ kann das Kanalfahrzeug 3 den Ladungsträger 2 unmittelbar vor den Ausrichtwinkeln 8 oder nach einem ersten In-Kontakt-Treten mit den Ausrichtwinkeln 8 absenken, so dass vorstehend erwähnte obere Kante des in Figur 8 gezeigten Ladungsträgers 2 während des Absenk-Vorgangs auf den Ausrichtwinkeln 8 entlanggleitet und durch dieses Gleiten in die gewünschte Position 10 gerückt wird.

**Obwohl nur einige bevorzugte Ausführungsbeispiele der Erfindung beschrieben und dargestellt wurden, ist es offensichtlich, dass der Fachmann zahlreiche Modifikationen hinzufügen** kann, sofern sie den Schutzbereich der nachstehenden Ansprüche nicht **verlassen. Insbesondere kann an folgende Modifikationen und Varianten gedacht sein:**
Es können mehrere Kanalfahrzeuge 3 und/oder mehrere Zentrierstationen in einem Kanallager zum Einsatz kommen.

Wie aus den Figuren 9 bis 17 hervorgeht, können die Zentriermittel 5 im Querschnitt spiegelsymmetrisch zur vertikalen Achse y und im Längsschnitt spiegelsymmetrisch zur Längsachse z ausgebildet sein. Dies gilt vorzugsweise für sämtliche in den Figuren 1 bis 18 gezeigten Ausführungsformen. Es kann jedoch auch daran gedacht sein, die beiden Zentriermittel 5 einer Zentrierstation unterschiedlich auszugestalten. Insbesondere können die in den Figuren 9 bis 17 gezeigten Formen der Zentriermittel 5 miteinander kombiniert werden. So kann in einer Zentrierstation auf einer Seite ein Zentriermittel 5 mit als Strecke ausgebildetem Abschnitt 13 einem Zentriermittel 5 mit als Kreisbogen ausgebildetem Abschnitt 13 gegenüberliegend angeordnet sein.

Ferner können die in den Figuren 9, 10, 11, 15 und 17 gezeigten Querschnitte sowie die Ausführungsform nach Figur 18 mit den in den Figuren 12, 13, 14 und 16 gezeigten Längsschnitten beliebig kombiniert werden.

Anstelle der in den Figuren 10 und 11 gezeigten konvexen bzw. konkaven Kreisbögen können die Abschnitte 13 der Zentriermittel 5 auch andere Kurvenformen aufweisen, und beispielsweise als Ellipsenbögen oder in Form von Ästen einer Parabel oder in Form eines Abschnitts eines solchen Parabel-Astes ausgebildet sein.

Dasselbe gilt für die in den Figuren 13 und 14 gezeigten Längsschnitte.

Es kann jeweils an beliebige gekrümmte Kurven gedacht sein, sofern die lichte Weite 16 in negativer vertikaler Richtung y, d.h. nach unten, und entlang der positiven Längsrichtung z, d.h. nach hinten zum Ende des Zentrierkanals 1 hin, bevorzugt über zumindest 70% der Ausdehnung in negativer vertikaler Richtung y (d.h. nach unten) und bevorzugt über zumindest 70% der Ausdehnung in Längsrichtung, d.h. nach hinten zum Ende des Zentrierkanals 1 hin, kleiner wird oder konstant bleibt. Vorzugsweise betragen die vorgenannten Werte zumindest 80% der jeweils genannten Ausdehnung, noch bevorzugter zumindest 90%.

Es kann an Ausführungsformen der Zentrierstation ohne Tragschienen 6 gedacht sein.

Ausführungsformen der vorliegenden Erfindung umfassen vornehmlich nur die in den Figuren gezeigte Zentrierstation. Weiterbildungsgemäss kann die vorliegende Erfindung auch ein Kanallager sowie zumindest ein Kanalfahrzeug 3 umfassen.

Eine Ausdehnung der Zentriermittel 5 in Längsrichtung z und somit vorzugsweise auch eine Ausdehnung des Zentrierkanals 1 in Längsrichtung z kann mehr oder weniger als 1600 Millimeter betragen. So kann an eine Ausdehnung in Längsrichtung z von zumindest 400 Millimetern, zumindest 800 Millimetern, zumindest 1200 Millimetern, zumindest 1600 Millimetern, zumindest 2000 Millimetern oder zumindest 2400 Millimetern gedacht sein.

Die in Figur 8 gezeigte Fehlpositionierung kann alternativ oder zusätzlich zu einem In-Kontakt-Treten mit den Ausrichtwinkeln 8 auch dadurch korrigiert werden, dass das Kanalfahrzeug 3 den Ladungsträger 2 auf den Tragschienen 6 absetzt, und sich anschliessend so weit in Längsrichtung z vorbewegt, dass der Ladungsträger 2 sich in der gewünschten Position 10 befindet. Dann kann das Kanalfahrzeug 3 den Ladungsträger 2 wieder aufnehmen.

Die Abschnitte 13 sind insbesondere als Flächenabschnitte ausgebildet. Linienförmige Ausgestaltungen und insbesondere eine Hintereinanderreihung solcher linienförmiger Abschnitte oder dergleichen sind alternativ denkbar.

Umfasst die Zentrierstation Ausrichtwinkel 8, so können genau ein Ausrichtwinkel 8, zwei Ausrichtwinkel 8 oder mehrere Ausrichtwinkel 8 vorhanden sein.

Ein In-Kontakt-Treten zwischen dem Ladungsträger 2 und dem zumindest einen Ausrichtwinkel 8 kann mittels Sensoren erfasst werden, wie dies im Hinblick auf ein In-Kontakt-Treten zwischen Ladungsträger 2 und Zentriermittel 5 beschrieben wurde.

Der zumindest eine Ausrichtwinkel 8 kann ausgebildet sein, wie dies in Bezug auf die Zentriermittel 5 beschrieben wurde. Es sind also beispielsweise beliebige Kurvenformen oder Hintereinanderreihungen von Formen denkbar.

Einem sehr einfachen Ausführungsbeispiel gemäss kann aber auch daran gedacht sein, dass der zumindest eine Ausrichtwinkel 8 parallel zur x-y-Ebene verläuft. Ein solcher Ausrichtwinkel 8 erlaubt zwar keine Positionskorrektur durch das vorbeschriebene Entlanggleiten. Jedoch kann eine Positionskorrektur erfolgen, indem das Kanalfahrzeug 3 in Längsrichtung z (d.h. in positiver z-Richtung) so weit in den Zentrierkanal 1 einfährt, dass der Ladungsträger 2 mit dem Ausrichtwinkel 8 in Kontakt tritt und dadurch in negativer Längsrichtung z auf dem Kanalfahrzeug 3 verschoben wird.

Der in Figur 9 gezeigter Winkel 14 kann auch zwischen 50° und 80° oder zwischen 55° und 70° liegen. Ein Winkel zwischen 55° und 65° ist bevorzugt, beispielsweise kann der Winkel bei etwa 60° liegen.

Ein in Figur 12 gezeigter Winkel 15 kann zwischen 0,1° und 10° liegen. Bevorzugter sind Winkel zwischen 0.1° und 5°, noch bevorzugter zwischen 0.2° und 4°, noch bevorzugter zwischen 0.3° und 3°, weiter bevorzugt zwischen 0.5° und 2°, weiter bevorzugt zwischen 0.7° und 1°, besonders bevorzugt Winkel von etwa 0,8°, beispielsweise 0,77°.

Bei der in Figur 17 gezeigten Ausführungsform kann der obere Abschnitt 13.1 einen Winkel zur Querrichtung x von beispielsweise 50° bis 60° aufweisen. Der untere Abschnitt 13.2 kann einen Winkel zur Querrichtung x von beispielsweise 60° bis 70° aufweisen. Der Abschnitt 13.1 kann beispielsweise einen Winkel von etwa 55° zur Querrichtung x aufweisen, der untere Abschnitt 13.2 einen Winkel zur Querrichtung x von 65°.

Der Zentrierkanal 1 umfasst vorzugsweise, aber nicht zwingend in allen Ausführungsbeispielen, den zwischen und somit innerhalb der in den Figuren 3 und 4 teilweise mit Bezugsziffern versehenen Regalpfosten 17 liegenden Bereich.

In Bezug auf die Figuren 5 bis 8 sei erwähnt, dass sämtliche Kombinationen der dort schematisch dargestellten Fehlpositionierungen mit Hilfe der Zentrierstation und des geschilderten Verfahrens korrigiert werden können. Dies gilt beispielsweise also für eine Fehlpositionierung in Form jeder beliebigen Kombination einer Rotation im Uhrzeigersinn oder gegen den Uhrzeigersinn, welche mit einer Verschiebung in x- oder z-Richtung kombiniert sein kann.

Sind keine Ausrichtwinkel 8 vorhanden, so kann das Kanalfahrzeug 3 den Zentrierkanal 1 durchqueren, und diesen an einem dem Eingang 9 gegenüberliegenden Ausgang nach Durchführung der Positionskorrektur verlassen. Sind Ausrichtwinkel 8 vorhanden, so verlässt das Kanalfahrzeug 3 den Zentrierkanal 1 in negativer Längsrichtung z.

Im Hinblick auf das in den Figuren jeweils eingezeichnete Koordinatensystem sei folgendes angemerkt: In üblichen Kanallagern werden die Längsrichtung der Kanäle mit z und eine Längsrichtung von orthogonal zu den Kanälen verlaufenden Gassen mit x bezeichnet. Die in den Figuren dargestellte Zentrierstation ist somit orthogonal zu den Gassen eines Kanallagers angeordnet und ausgerichtet. Es ist natürlich ebenso denkbar, die Zentrierstation beispielsweise am Ende einer Gasse anzuordnen, so dass die Längsrichtung des Zentrierkanals in Bezug auf die in Kanallagern üblichen Richtungsbezeichnungen in x-Richtung verläuft.

In Bezug auf den umgebogenen Abschnitt 18 in Figur 18 sei allgemein angemerkt, dass die lichte Weite 16 sowohl in Längsrichtung z als auch in negativer Vertikalrichtung y insbesondere konstruktions- oder fertigungsbedingt über gewisse Bereiche hinweg auch zunehmen kann. Hierbei ist jedoch die lichte Weite 16 vorzugsweise stets im untersten Bereich in Bezug auf die negative vertikale Richtung y und im hintersten Bereich (d.h. gegenüber des Eingangs 9) in Bezug auf die Längsrichtung z kleiner als im obersten (d.h. von den Fahrschienen 4 abgewandten) Bereich in Bezug auf die negative vertikale Richtung y und im Bereich des Eingangs 9 in Bezug auf die Längsrichtung z.

| **Bezugszeichenliste** | | | | | |
|---|---|---|---|---|---|
| 1 | Zentrierkanal | 34 | | | |
| 2 | Ladungsträger | 35 | | | |
| 3 | Kanalfahrzeug | 36 | | | |
| 4 | Fahrschiene | 37 | | | |
| 5 | Zentriermittel | 38 | | | |
| 6 | Tragschiene | 39 | | | |
| 7 | Ladung | 40 | | | |
| 8 | Ausrichtwinkel | 41 | | | |
| 9 | Eingang | 42 | | | |
| 10 | Gewünschte Position | 43 | | | |
| 11 | Mittelpunkt des Ladungsträgers | 44 | | | |
| 12 | Mittelpunkt der gewünschten Position | 45 | | | |
| 13 | Abschnitt | 46 | | | |
| 14 | Winkel | 47 | | | |
| 15 | Winkel | 48 | | | |
| 16 | lichte Weite | 49 | | | |
| 17 | Regalpfosten | 50 | | | |
| 18 | Umgebogener Abschnitt | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| | | 63 | | | |
| Z | Längsrichtung | 64 | | | |
| X | Querrichtung | 65 | | | |
| Y | Vertikale Richtung | 66 | | | |

## Patentansprüche

1. Zentrierstation zur Korrektur einer Position eines Ladungsträgers (2) auf einem Kanalfahrzeug (3) mit
einem entlang einer Längsrichtung (z) verlaufenden Zentrierkanal (1),
der Zentrierkanal (1) umfassend
zumindest eine in Längsrichtung (z) verlaufende Fahrschiene (4) für das Kanalfahrzeug (3) und
zumindest zwei im Wesentlichen in Längsrichtung (z) oberhalb der zumindest einen Fahrschiene (4) verlaufende **Zentriermittel** (5),
wobei der Zentrierkanal (1) einen Eingang (9) umfasst, welcher eine Einfahrt des Kanalfahrzeugs (3) in den Zentrierkanal (1) erlaubt,
wobei die lichte Weite zwischen den Zentriermitteln (5) in vertikaler Richtung (y), also vertikal und orthogonal zur Längsrichtung (z) zu der zumindest einen Fahrschiene (4) hin abnimmt,
**dadurch gekennzeichnet, dass** eine lichte Weite zwischen den Zentriermitteln (5) in Längsrichtung (z) des Zentrierkanals (1) abnimmt,
wobei diese lichte Weite in Querrichtung (x), also horizontal und orthogonal zur Längsrichtung (z) gemessen wird.

2. Zentrierstation nach Anspruch 1, **dadurch gekennzeichnet, dass** die Abschnitte (13) der Zentriermittel (5), welche eingerichtet sind, zwecks Korrektur einer Position des Ladungsträgers (2) auf dem Kanalfahrzeug (3) mit dem Ladungsträger (2) in Kontakt zu treten, im **Querschnitt** ausgebildet sind als eine Form, welche aus der folgenden Liste ausgewählt ist:
- Strecke
- Hintereinanderreihung mehrerer Strecken
- Abschnitt eines Asts einer Parabel
- Kreisbogen
- Ellipsenbogen
- Hintereinanderreihung von zumindest zwei der vorgenannten Formen.

3. Zentrierstation nach einem der vorangehenden Ansprüche, **dadurch gekennzeichnet, dass** die Abschnitte der Zentriermittel (5), welche eingerichtet sind, zwecks Korrektur der Position des Ladungsträgers (2) auf dem Kanalfahrzeug (3) mit diesem in Kontakt zu treten, im **Längsschnitt** ausgebildet sind als eine Form, welche aus der folgenden Liste ausgewählt ist:
- Strecke
- Hintereinanderreihung mehrerer Strecken
- Abschnitt eines Asts einer Parabel
- Kreisbogen
- Ellipsenbogen
- Hintereinanderreihung von zumindest zwei der vorgenannten Formen.

4. Zentrierstation nach einem der vorangehenden Ansprüche, **dadurch gekennzeichnet, dass** im Zentrierkanal (1) endseitig gegenüber dem Eingang (9) zumindest ein Ausrichtwinkel (8) vorgesehen ist.

5. Zentrierstation nach Anspruch 3, **dadurch gekennzeichnet, dass** die Zentriermittel (5) oder zumindest nicht parallel zur Längsrichtung (z) ausgebildete Abschnitte (13) der Zentriermittel (5) eine Ausdehnung in Längsrichtung (z) von zumindest 400 Millimetern aufweist.

6. Zentrierstation nach einem der vorangehenden Ansprüche, **gekennzeichnet durch** zumindest zwei in Längsrichtung (z) verlaufende Tragschienen (6) für den Ladungsträger.

7. Kanallager umfassend ein Kanalfahrzeug (3) und eine Zentrierstation nach zumindest einem der vorangehenden Ansprüche.

8. Verfahren zum Handhaben zumindest eines Ladungsträgers (2) in einem ein Kanalfahrzeug (3) umfassenden Kanallager, das Verfahren umfassend folgende Schritte:
- Das Kanalfahrzeug (3) nimmt den Ladungsträger (2) auf,
- Korrigieren der Position des Ladungsträgers (2) auf dem Kanalfahrzeug (3), indem das mit dem Ladungsträger (2) beladene Kanalfahrzeug (3) durch einen Eingang (9) eines Zentrierkanals (1) einer Zentrierstation in Längsrichtung (z) in diesen Zentrierkanal (1) einfährt,
wobei dieser Zentrierkanal (1) zumindest eine in Längsrichtung (z) verlaufende Fahrschiene (4) für das Kanalfahrzeug (3) aufweist, wobei der Zentrierkanal (1) weiterhin zumindest zwei im Wesentlichen in Längsrichtung (z) oberhalb der zumindest einen Fahrschiene (4) verlaufende Zentriermittel (5) und/oder zumindest einen endseitig gegenüber dem Eingang (9) angeordneten Ausrichtwinkel (8) aufweist,
wobei das Korrigieren der Position durch In-Kontakt-Treten des Ladungsträgers (2) mit zumindest einem der Zentriermittel (5) und/oder zumindest einem der Ausrichtwinkel (8) erfolgt,
**dadurch gekennzeichnet, dass** die Zentrierstation gemäss einem der Ansprüche 1 bis 6 ausgebildet ist.

9. Verfahren nach Anspruch 8, wobei das Korrigieren der Position des Ladungsträgers (2) auf dem Kanalfahrzeug (3) derart erfolgt, dass das Kanalfahrzeug (3) den Ladungsträger (2) in der Zentrierstation zumindest einmal absenkt und vorzugsweise anschliessend anhebt.

10. Verfahren nach Anspruch 9, wobei das mit dem Ladungsträger (2) beladene Kanalfahrzeug (3) in eine Zentrierstation gemäss Anspruch 6 durch den Eingang in Längsrichtung (z) einfährt, **dadurch gekennzeichnet, dass** das Kanalfahrzeug (3) den Ladungsträger (2) während des Einfahrens in die Zentrierstation zumindest einmal soweit absenkt, dass der Ladungsträger (2) auf den Tragschienen (6) abgesetzt wird, und wobei das Kanalfahrzeug (3) den Ladungsträger (2) anschliessend wieder anhebt.

11. Verfahren nach zumindest einem der Ansprüche 8 bis 10, wobei das mit dem Ladungsträger (2) beladene Kanalfahrzeug (3) in eine Zentrierstation gemäss zumindest Anspruch 4 durch den Eingang in Längsrichtung (z) einfährt, **dadurch gekennzeichnet, dass** das Kanalfahrzeug (3) derart in den Zentrierkanal (1) einfährt, dass der Ladungsträger (2) mit zumindest einem Ausrichtwinkel (8) in Kontakt tritt.

12. Verfahren nach zumindest einem der Ansprüche 10 bis 11, **dadurch gekennzeichnet, dass** das Kanalfahrzeug (3) den Ladungsträger (2) absenkt, unmittelbar nachdem ein Kontakt zwischen dem Ladungsträger (2) und zumindest einem der Zentriermittel (5) erfolgt ist.

13. Verfahren nach zumindest einem der Ansprüche 8 bis 12, **dadurch gekennzeichnet, dass** das Korrigieren der Position des Ladungsträgers (2) auf dem Kanalfahrzeug (3) durch Einfahren in die Zentrierstation immer dann erfolgt, wenn entweder eine Positionskorrektur als notwendig erkannt wird oder eine vorbestimmte Anzahl an Umlagerungen erfolgt ist.

## Claims

1. Centring station for correcting the position of a load carrier (2) on a channel vehicle (3), comprising
a centring channel (1) extending along a longitudinal direction (z),
the centring channel (1) comprising
at least one guide rail (4) for the channel vehicle (3) extending in the longitudinal direction (z) and
at least two centring means (5) extending substantially in the longitudinal direction (z) above the at least one guide rail (4),
wherein the centring channel (1) comprises an entrance (9) which allows the channel vehicle (3) to enter the centring channel (1),
wherein the clear width between the centring means (5) decreases in the vertical direction (y), i.e. vertically and orthogonally to the longitudinal direction (z), towards the at least one guide rail (4),
**characterised in that** a clearance between the centring means (5) decreases in the longitudinal direction (z) of the centring channel (1),
wherein this clearance is measured in the transverse direction (x), i.e. horizontally and orthogonally to the longitudinal direction (z).

2. Centring station according to claim 1, **characterised in that** the sections (13) of the centring means (5), which are arranged to come into contact with the load carrier (2) for the purpose of correcting the position of the load carrier (2) on the channel vehicle (3), are formed in cross-section as a shape selected from the following list:
- straight line
- sequence of several straight lines
- section of a branch of a parabola
- circular arc
- elliptical arc
- sequence of at least two of the aforementioned shapes.

3. Centring station according to any of the preceding claims, **characterised in that** the sections of the centring means (5), which are arranged to come into contact with the channel vehicle (3) for the purpose of correcting the position of the load carrier (2) on the channel vehicle (3), are formed in longitudinal section as a shape selected from the following list:
- straight line
- sequence of several straight lines
- section of a branch of a parabola
- circular arc
- elliptical arc
- sequence of at least two of the aforementioned shapes.

4. Centring station according to any of the preceding claims, **characterised in that** at least one alignment angle (8) is provided in the centring channel (1) at the end opposite the inlet (9).

5. Centring station according to claim 3, **characterised in that** the centring means (5) or at least those sections (13) of the centring means (5) which are not parallel to the longitudinal direction (z) have a length in the longitudinal direction (z) of at least 400 millimetres.

6. Centring station according to any one of the preceding claims, **characterised by** at least two support rails (6) extending in the longitudinal direction (z) for the load carrier.

7. A channel warehouse comprising a channel vehicle (3) and a centring station according to at least one of the preceding claims.

8. A method for handling at least one load carrier (2) in a channel warehouse comprising a channel vehicle (3), the method comprising the following steps:
- the channel vehicle (3) picks up the load carrier (2),
- correcting the position of the load carrier (2) on the channel vehicle (3) by the channel vehicle (3), loaded with the load carrier (2), entering this centring channel (1) in the longitudinal direction (z) through an entrance (9) of a centring channel (1) of a centring station,
wherein this centring channel (1) comprises at least one guide rail (4) for the channel vehicle (3) extending in the longitudinal direction (z), wherein the centring channel (1) further comprises at least two centring means (5) and/or at least one alignment angle (8) arranged at the end opposite the entrance (9),
wherein the correction of the position is effected by the load carrier (2) coming into contact with at least one of the centring means (5) and/or at least one of the alignment angles (8),
**characterised in that** the centring station is configured in accordance with one of claims 1 to 6.

9. A method according to claim 8, wherein the correction of the position of the load carrier (2) on the channel vehicle (3) is carried out such that the channel vehicle (3) lowers the load carrier (2) in the centring station at least once and preferably subsequently raises it.

10. A method according to claim 9, wherein the channel vehicle (3) loaded with the load carrier (2) enters a centring station according to claim 6 via the entrance in the longitudinal direction (z), **characterised in that** the channel vehicle (3) lowers the load carrier (2) at least once during entry into the centring station to such an extent that the load carrier (2) is set down on the support rails (6), and wherein the channel vehicle (3) subsequently raises the load carrier (2) again.

11. A method according to at least one of claims 8 to 10, wherein the channel vehicle (3) loaded with the load carrier (2) enters a centring station according to at least claim 4 via the entrance in the longitudinal direction (z), **characterised in that** the channel vehicle (3) enters the centring channel (1) in such a way that the load carrier (2) comes into contact with at least one alignment angle (8).

12. A method according to at least one of claims 10 to 11, **characterised in that** the channel vehicle (3) lowers the load carrier (2) immediately after contact has been made between the load carrier (2) and at least one of the centring means (5).

13. A method according to at least one of claims 8 to 12, **characterised in that** the correction of the position of the load carrier (2) on the channel vehicle (3) by entering the centring station takes place whenever either a position correction is detected as necessary or a predetermined number of repositionings has occurred.

## Revendications

1. Station de centrage pour corriger la position d'un support de charges (2) sur une navette (3), comprenant
un canal de centrage (1) s'étendant le long d'une direction longitudinale (z),
le canal de centrage (1) comprenant
au moins un rail de roulement (4), s'étendant dans la direction longitudinale (z), pour la navette (3), et
au moins deux moyens de centrage (5) s'étendant sensiblement dans la direction longitudinale (z) au-dessus dudit au moins un rail de roulement (4),
le canal de centrage (1) comprenant une entrée (9) qui permet à la navette (3) d'entrer dans le canal de centrage (1),
la largeur libre entre les moyens de centrage (5) dans la direction verticale (y), c'est-à-dire verticalement et orthogonalement à la direction longitudinale (z), diminue vers ledit au moins un rail de roulement (4),
**caractérisée en ce que**
la largeur libre entre les moyens de centrage (5) diminue dans la direction longitudinale (z) du canal de centrage (1),
cette largeur libre étant mesurée dans la direction transversale (x), c'est-à-dire horizontalement et orthogonalement à la direction longitudinale (z).

2. Station de centrage selon la revendication 1,
**caractérisée en ce que** les moyens de centrage (5) comprennent des portions (13) qui sont conçues pour entrer en contact avec le support de charges (2) afin de corriger une position du support de charges (2) sur la navette (3), ces portions étant conçues, en coupe transversale, sous une forme choisie dans la liste suivante :
- segment droit,
- succession de plusieurs segments droits,
- portion d'une branche d'une parabole,
- arc de cercle,
- arc d'ellipse,
- succession d'au moins deux des formes susmentionnées.

3. Station de centrage selon l'une des revendications précédentes,
**caractérisée en ce que** les moyens de centrage (5) comprennent des portions qui sont conçues pour entrer en contact avec le support de charges (2) afin de corriger la position de celui-ci sur la navette (3), ces portions étant conçues, en coupe longitudinale, sous une forme choisie dans la liste suivante :
- segment droit,
- succession de plusieurs segments droits,
- portion d'une branche d'une parabole,
- arc de cercle,
- arc d'ellipse,
- succession d'au moins deux des formes susmentionnées.

4. Station de centrage selon l'une des revendications précédentes,
**caractérisée en ce qu'**au moins une équerre d'alignement (8) est prévue dans le canal de centrage (1) à l'extrémité opposée à l'entrée (9).

5. Station de centrage selon la revendication 3,
**caractérisée en ce que** les moyens de centrage (5) ou au moins les portions (13) des moyens de centrage (5) qui ne sont pas parallèles à la direction longitudinale (z) ont une extension dans la direction longitudinale (z) d'au moins 400 millimètres.

6. Station de centrage selon l'une des revendications précédentes,
**caractérisée par** au moins deux rails de support (6), s'étendant dans la direction longitudinale (z), pour le support de charges.

7. Entrepôt à canaux comprenant une navette (3) et une station de centrage selon l'une au moins des revendications précédentes.

8. Procédé de manutention d'au moins un support de charges (2) dans un entrepôt à canaux comprenant une navette (3), le procédé comprenant les étapes suivantes :
- la navette (3) prend en charge le support de charges (2),
- correction de la position du support de charges (2) sur la navette (3) du fait que la navette (3), chargée du support de charges (2), entre dans un canal de centrage (1) d'une station de centrage dans la direction longitudinale (z) par une entrée (9) de ce canal de centrage (1),
ce canal de centrage (1) comportant au moins un rail de roulement (4), s'étendant dans la direction longitudinale (z), pour la navette (3), le canal de centrage (1) comportant en outre au moins deux moyens de centrage (5) s'étendant sensiblement dans la direction longitudinale (z) au-dessus dudit au moins un rail de roulement (4), et/ou au moins une équerre d'alignement (8) disposée à l'extrémité opposée à l'entrée (9),
la correction de la position s'effectuant par la mise en contact du support de charges (2) avec l'un au moins des moyens de centrage (5) et/ou avec l'une au moins des équerres d'alignement (8),
**caractérisé en ce que**
la station de centrage est réalisée selon l'une des revendications 1 à 6.

9. Procédé selon la revendication 8,
dans lequel la correction de la position du support de charges (2) sur la navette (3) s'effectue de telle sorte que la navette (3) abaisse au moins une fois le support de charges (2) dans la station de centrage et le soulève de préférence ensuite.

10. Procédé selon la revendication 9,
dans lequel la navette (3) chargée du support de charges (2) entre dans une station de centrage selon la revendication 6 par l'entrée dans la direction longitudinale (z),
**caractérisé en ce que** la navette (3) abaisse le support de charges (2) au moins une fois pendant son entrée dans la station de centrage, de telle sorte que le support de charges (2) soit déposé sur les rails de support (6), et la navette (3) soulève ensuite le support de charges (2).

11. Procédé selon l'une au moins des revendications 8 à 10,
dans lequel la navette (3) chargée du support de charges (2) entre dans une station de centrage selon au moins la revendication 4 par l'entrée dans la direction longitudinale (z),
**caractérisé en ce que** la navette (3) entre dans le canal de centrage (1) de telle manière que le support de charges (2) entre en contact avec au moins une équerre d'alignement (8).

12. Procédé selon l'une au moins des revendications 10 à 11,
**caractérisé en ce que** la navette (3) abaisse le support de charges (2) immédiatement après qu'un contact entre le support de charges (2) et l'un au moins des moyens de centrage (5) a eu lieu.

13. Procédé selon l'une au moins des revendications 8 à 12,
**caractérisé en ce que** la correction de la position du support de charges (2) sur la navette (3) entrant dans la station de centrage s'effectue chaque fois qu'une correction de position est reconnue comme nécessaire ou qu'un nombre prédéfini de transferts a été effectué.
